# EUROPÄISCHE PATENTANMELDUNG

(11) **EP 1 881 314 A2**
(43) Veröffentlichungstag der Anmeldung: **23.01.2008**
(21) Anmeldenummer: 07108611.0
(22) Anmeldetag: 22.05.2007
(51) Int. Cl.: G01L 9/04

(54) **Profiliertes Bauelement aus Metall für Fluidumhüllungen sowie Verfahren zum Vorsehen eines Drucksensors daran**

(30) Priorität: 18.07.2006 DE 102006033266
(71) Anmelder: Trafag AG, 8708 Männedorf (CH)
(72) Erfinder: Zeisel, Dieter Dr., 8127, Forch (CH); Gujer, Peter, 8708, Männedorf (CH); Stark, Daniel, 8646, Wagen (CH)
(74) Vertreter: Kastel, Stefan

(57) **Zusammenfassung**

Die Erfindung betrifft ein profiliertes einteiliges Bauelement (52, 54, 70) aus Metall zum Bilden einer ein unter Druck stehendes Fluid aufnehmenden oder leitenden Umhüllung, wobei die Profilierung (56, 58, 60; 72) durch Herstellung des Bauelements in MIM-Technik mittels eines Spritzgusspulvers eingebracht ist, wobei wenigstens ein Wandbereich (63a-63d; 65, 76) des Bauelements einen einstückig in das Bauelement integrierten Verformungskörper (4, 63a-63d; 65, 76, 20, 6, 22) eines Drucksensors (2) bildet, welcher Verformungskörper (4, 63a-63d; 65, 76; 20; 6, 22) durch das unter Druck stehende Fluid verformbar ist, um so den Druck des Fluids mittels des Drucksensors (2) zu messen. Außerdem betrifft die Erfindung ein Verfahren zum Versehen einer ein Fluid einschließenden Umhüllung mit einem Drucksensor durch Herstellung eines Bauelements der Umhüllung mit integriertem Drucksensor in MIM-Technik.

## Beschreibung

Die Erfindung betrifft ein profiliertes einteiliges Bauelement aus Metall zum Bilden einer ein unter Druck stehendes Fluid aufnehmenden oder leitenden Umhüllung. Die Erfindung betrifft einsbesondere ein Rohrteilstück wie zum Beispiel eine Muffe einer Leitung zum Leiten des unter Druck stehenden Fluids oder ein Gehäuseteil, wie zum Beispiel einen Gehäusedeckel oder ein Gehäusekörper eines das unter Druck stehende Fluid aufnehmenden Gehäuses.

Bei sehr vielen technischen Anwendungen werden unter Druck stehende Fluide eingesetzt, die in Umhüllungen wie Gehäusen oder Rohrleitungen druckdicht aufzunehmen sind. Beispiele sind Hydraulikanwendungen, Motoren (Motorgehäuse mit Zylinderkopf), Gasleitungen, Pipelines usw. Will man den Druck des eingesetzten Fluids messen, so müssen Drucksensoren an der Umhüllung oder dem Bauteil eingesetzt werden. Hierzu werden die Umhüllungen oder Bauteile in der Regel mit Öffnungen versehen, an denen die Drucksensoren montiert werden.

Drucksensoren werden im allgemeinen so aufgebaut, dass die Auslenkung einer mit dem zu messenden druckbeaufschlagten Membran festgestellt und ausgewertet wird.

Um ganz verschiedene Medien messen zu können, bestehen diese Membrane in vielen Fällen aus chemisch nicht reaktiven Materialien, insbesondere aus Edelstahl. Das Material muss dazu geeignet sein, bei Druckbeaufschlagung eine reproduzierbare Auslenkung zu liefern. Hierzu wird vielfach Federstahl verwendet.

Die Membran schließt im allgemeinen eine Seite einer Druckmesszelle ein, in der zu messendes Medium enthalten ist. Der Aufbau dieser Druckmesszelle ist je nach Anwendungs- und Einsatzzweck sehr unterschiedlich. Eine Schwierigkeit bei dem Design besteht darin, die Wandungen der Druckmesszelle einerseits dicht zu machen, andererseits mediumkompatibel zu halten, so dass auch verschiedene aggressive Medien gemessen werden können. Andererseits soll die Druckmesszelle kostengünstig herstellbar sein.

Man hat bei Drucksensoren im Stand der Technik erhebliche Anstrengungen erhoben, die Membran dichtend mit ihrem Trägermaterial zu verbinden. Hierzu wurden bereits vielfach einstückige Druckmesszellen vorgeschlagen, bei der die Membran einstückig mit der Trägerwandung ausgebildet ist. Diese Druckmesszellen sind dann beispielsweise hutförmig ausgebildet. Sie wurden bisher beispielsweise durch spanabhebende Verfahren oder Erudierverfahren aus einem massiven Stück Metall, beispielsweise einem Edelstahlblock herausgearbeitet. Diese Herstellverfahren liefern Druckmesszellen oder dergleichen Verformungskörper mit befriedigenden bis sehr guten Ergebnissen. Jedoch geben sie meist die äußere Form der Druckmesszelle vor, oder die äußere Form muss in sehr aufwändigen Verfahren an Kundenwünsche angepasst werden.

Metallische Drucksensoren werden heutzutage vorzugsweise aus 17-4 PH (1.4548 oder 1.4542), einem martensitischen Federstahl hergestellt. Es finden sich auch Legierungen wie zum Beispiel Inconel 718 oder der Stahl 1.4571. Allen bisher bekannten Drucksensoren gemeinsam ist ein komplizierter und teuerer Drehprozess, sowie eine eingeschränkte Gestaltungsmöglichkeit. Die Einschränkungen der Gestaltungsmöglichkeiten ergeben sich unter anderem dadurch, dass die typischen metallischen Druckkapseln und Drucksensoren bestimmten Randbedingungen beim Einbau genügen müssen. Es müssen die auftretenden Kräfte, wie beispielsweise Klemmkräfte und Abstützkräfte beachtet werden. Auch ist vielfach Bedingung, dass die Drucksensoren beim Schweißen auftretende Temperaturen aushalten müssen.

Aus der WO98/0914 A1 ist ein Verfahren zum Herstellen von Drucksensoren sowie ein damit hergestellter Drucksensor bekannt. Dabei werden eine Vielzahl von Verformungskörpern aus Metall in Form von Hutmembranen auf einem Nutzen hergestellt. Der gesamte Nutzen mit den noch verbundenen Hutmembranen kann in sogenannter MIM-Technologie im Metall-Spritzgussverfahren hergestellt werden. Für alle diese Hutmembranen wird dann auf dem Nutzen eine resistive Dünnschicht zum Bilden von DMS eingebracht. Anschließend werden die so bereits mit Strukturen zum Bilden des Drucksensors versehenen Hutmembranen vereinzelt. Die Hutmembranen werden dann jeweils in einem Sensorgehäuse eingesetzt, das wie bei üblichen Drucksensoren an ein Gehäuse, das ein Volumen mit zu messendem Fluid enthält angeschraubt werden kann.

Der Begriff MIM stammt aus dem Englischen "metal injection moulding" und lässt sich etwa mit Metallpulver-Spritzguss beschreiben. Das Verfahren vereinigt die Vorteile des auf der Herstellung von Kunststoffteilen bekannten Plastikspritzgießens mit dem Sintern von Metallpulvern.

Plastikspritzgießen wird bei der Herstellung komplex geformter Kunststoffteile verwendet. In einer Spritgießmaschine wird Plastikgranulat aufgeschmolzen und dann in flüssigem Zustand unter Druck in eine Spritzform eingespritzt.

Beim Sintern von Metallpulver werden aus Metallpulvern verschiedenster Legierungen Metallteile hergestellt. Das Metallpulver wird mit großer Kraft in eine Form gepresst, wodurch ein aus Pulver aufgebautes Formteil entsteht. Diese wird der Form entnommen und einer Wärmebehandlung unterzogen, bei der die Metallpartikel durch die Fusionsprozesse zu einem Ganzen zusammenwachsen (sintern).

Bei dem Metallspritzgussverfahren wird ein meist aus Kunststoff gebildeter Binder und ein sehr feines Metallpulver zu einem spritzfähigen Ausgangsmaterial vermischt, wobei der Metallpulvergehalt den weitaus überwiegenden Gewichtsanteil ausmacht. Dieses fließfähige Material wird mit einer Spritzgießmaschine, beispielsweise einer konventionellen Plastikspritzgießmaschine wie Kunststoff zu (Vor)- Formteilen verarbeitet. Aus diesen Vor-Formteilen oder "grünen" Formteilen wird der Binderanteil, der die Formgebung erst ermöglicht hat, herausgelöst, ohne dass die Teile selbst ihre Form verlieren. In einem weiteren Schritt werden die Teile gesintert und erhalten so metallische Eigenschaften. Dabei schrumpft das Teil auf sein Endmaß mit entsprechend hoher Dichte.

Diese MIM-Technologie kann auch zum Herstellen von multifuntkionalen Metallen verwendet werden. John L. Johnson et al. beschreiben in dem Aufsatz « Metall Injection Molding of Multi-Functional Materials », Proceedings of the international mechanical engineering congress and exposition - IMECE - SME, 15. November 2003, Seiten 1- 6, XP002323484, wie ein einstückiger Halter für einen Drehwinkelsensor als einstückiges Bauelement bestehend aus magnetischen und nichtmagnetischen Legierungen in MIM-Technik hergestellt werden kann.

Um die so hergestellten bekannten Drucksensoren zur Druckmessung einsetzen zu können, werden in der Regel die das Fluid einschließenden Umhüllungen (Rohrteile, Gehäuseteile, Motorteile, Pipelines usw.) oder deren Bauteile oder Bauelemente mit Öffnungen versehen, an denen die Drucksensoren montiert werden. Hierzu müssen Dichtungen eingesetzt werden, die oft, gerade in sicherheitsrelevanten Systemen oder bei aggressiven Medien oder bei Hochdruckanwendungen problematisch sind.

Die Erfindung hat sich zur Aufgabe gestellt, die Druckmessung an unter Druck stehende Fluide aufnehmenden Umhüllungen sicherer und einfacher zu machen. Insbesondere soll die Gefahr von Leckagen vermieden werden und die Anzahl von Dichtungen verringert werden.

Hierzu wird das Bauelement mit den Merkmalen des Anspruchs 1 bzw. ein Verfahren zum Versehen der Umhüllung mit einem Drucksensor gemäß Anspruch 9 vorgeschlagen.

Vorteilhafte Ausgestaltungen der Erfindung sind Gegenstand der Unteransprüche.

Erfindungsgemäß lässt sich auch ein komplizierteres profiliertes Bauelement, wie es zum Bilden von Umhüllungen wie Gehäusen, Motoren, Druckleitungen usw. benötigt wird, dadurch mit einem durch ein zu messendes Medium zur Druckmessung verformbaren metallenen Verformungskörper versehen, dass das gesamte profilierte Bauelement aus Metall in MIM-Technik hergestellt wird, wobei der Verformungskörper gleich als integraler Bestandteil mit hergestellt wird. Durch die MIM-Technik lassen sich auch komplizierte Profilierungen einfach herstellen, so dass zum Beispiel Flansche und Ringflansche zur einfachen Abdichtung mit den anderen Bauteilen der Umhüllung geschaffen werden können. Gleichzeitig lässt sich ein einstückiger Wandbereich des Bauelements einfach auch als hochsensitiver Verformungskörper ausbilden, der je nach Druck des Fluids ausgelenkt wird. Dadurch lässt sich unmittelbar in die Wand der Umhüllung ein Drucksensor ohne Nahtstellen oder Dichtungen integrieren.

Dadurch wird ein Bauelement mit integriertem Drucksensor mit metallenem Verformungskörper zur Verfügung gestellt, bei dem zwischen Drucksensor und der das Fluid eingrenzenden Wand keine Nahtstellen, Verbindungen oder Schweißstellen vorhanden sind, wobei dennoch für das Bauelement große Gestaltungsmöglichkeiten zur Verfügung stehen.

Das Bauelement kann zum Beispiel der Zylinderkopfdeckel eines Hubkolbenmotors, das Motorgehäuse eines Motors, der Gehäusekörper oder der Gehäusedeckel einer Hydraulikeinheit oder vieles mehr sein. Das Bauelement kann auch als Zwischenstück für eine Rohrleitung oder als ganzes Rohr ausgebildet sein. Mit der MIM-Technik lassen sich einerseits notwendige Profilierungen zur Erfüllung von Hauptfunktionen des Bauelements (z.B. Führen/Leiten/Abdichten von Fluid) auch in komplizierter Form und auch in Sonderformen einfach herstellen; andererseits kann ein Teilbereich als Verformungskörper ausgebildet werden, der integral mit einer Membran oder dergleichen zur Erfassung des Drucks ausgestattet ist.

Auch zur Herstellung des in das Bauelement einstückig integrierten Verformungskörpers, also beispielsweise einer Membran oder einer gesamten Druckmesszelle, wird das sogenannte MIM-Verfahren verwendet.

Es lassen sich hierdurch auch sehr komplexe Formen von Bauelementen mit Verformungskörpern herstellen. Die Bauelemente und der die Verformungskörper bildenden Teilbereiche können beispielsweise auch mit Hinterschneidungen, mit mehreren Membranbereichen und mit ganz komplexen äußeren Formen, die in Maschinen oder sonstige Vorrichtungen, an denen Druck zu messen ist, individuell eingepasst werden können, verarbeitet werden.

Mit diesem Verfahren lassen sich auch Metallteile herstellen, die gegenüber aggressiven Medien kompatibel sind. So lassen sich konventionelle aus rostfreiem Federstahl gebildete Membrane durch ein im MIM-Verfahren hergestelltes Formteil ersetzen. Trotz der ungewöhnlichen Herstellweise aus Metallpulver sind die mechanischen Verformungseigenschaften des so hergestellten Verformungskörpers für den Einsatz in Drucksensoren geeignet.

Hierzu lässt sich äußerst einfach ein in einem Subkomponentenaufbau, nämlich dem hier beschriebenen Bauelement zum Bilden der Fluidumhüllung integrierter Metall-Drucksensor realisieren.

Mit dem erfindungsgemäßen Verfahren können nun die üblichen gedrehten Druckkapseln oder Druckmesszellen völlig weggelassen werden. Die Druckmesszelle kann integral in einem größeren Bauelement, das erfindungsgemäß hergestellt ist, einstückig damit hergestellt werden. Man lässt beim Spritzprozess einfach einen der gewünschten Druckmesskammer entsprechenden Raum frei.

Zur Verbesserung der Materialeigenschaften der Membran des an dem Bauelement integrierten Verformungskörpers kann der als Membran zu verwendende Bereich in dem Metallspritzgussverfahren zunächst dicker als später erwünscht hergestellt werden und dann gezielt ausgedünnt werden.

Dies erfolgt beispielsweise durch Abschleifen oder Erudieren oder sonstige bekannten Metallabtragverfahren. Hierdurch lassen sich eventuelle Oberflächendefekte entfernen oder ausheilen, so dass eine Membran mit exakt definierbarem Verformungsverhalten erhältlich ist.

In bevorzugter Ausgestaltung wird das Bauelement derart hergestellt, dass die Spritzdüse, mit der das Material in die Form eingespritzt wird, etwa mittig an einem späteren Membranbereich angesetzt wird. Insbesondere, wenn dieser Membranbereich rotationssymmetrisch zu der Mittelachse der Düse hergestellt wird, lässt sich so eine gute Homogenität erreichen.

Der Membranbereich ist beispielsweise durch eine dünnere Ringschicht und ein dickeres Material im Zentrum und am Rand gekennzeichnet. Spritzt man hier von der Oberseite (der dem Druckmessform abgewandten Seite) aus dem Zentrum heraus, lässt sich die Kreisringmembran sehr homogen herstellen. Die Unterseite, d. h. die Druckmess-Seite lässt sich vorzugsweise durch verschiedene Einsätze (z. B. Stempel) individuell anpassen.

Vorteile des erfindungsgemäßen Verfahrens liegen in einer überaus hohen Flexibilität und Anpassungsfähigkeit sowie in der Gestaltungsfreiheit, mit der beliebige Formen und Körper herstellbar, adaptierbar und integrierbar sind. In Bezug auf Drucksensoren ist besonders vorteilhaft, dass Schnittstellen eingespart werden können.

Man kann mit erfindungsgemäßen Verfahren das Bauelement mit integrierter Druckmesszelle ganz ohne Fügestellen, Schweiß- oder Lötstellen oder mechanische Verbindungen mehrerer Teile herstellen.

Konkrete Ausführungsbeispiele für Verformungskörper sind zum Beispiel eine in einen Wandbereich des Bauelements integrierte Hutmembran. Vorzugsweise ist das Bauelement oder auch nur der Wandbereich aus Stahl 17-4 PH (ferritisch aufgrund des Herstellungsprozesses C-frei) hergestellt. Wie mehrere unterschiedliche Materialien integriert werden können, ist in dem oben näher bezeichneten Aufsatz von Johnson et al. näher beschrieben. Dadurch kann der Verformungskörperbereich auch mit anderen Materialeigenschaften als der Rest des Bauelements hergestellt werden.

Es ist auch die Integration eines Multimembran-Elements in das Bauelement möglich. Auch ein Bauelement mit mehreren Membranbereichen kann in einem Schritt hergestellt werden. In diesem Fall ist vorteilhaft, wenn pro Membranbereich eine Spritzdüse, vorzugsweise zentrisch zu dem Membranbereich, eingesetzt wird.

Alternativ könnten Einzelteile mit je einem Membranbereich als "grüne" Formteile gespritzt werden und dann zu einem Multimembran-Element zusammengesintert werden.

Ein Vorteil des erfindungsgemäß herstellbaren Bauelements liegt weiter darin, dass auch komplizierterer, zum Beispiel nicht rotationssymmetrische, Befestigungselemente (zum Beispiel Flansche, Vorsprünge, auch z.B. solche, die mit Gewinde versehen sind) sehr einfach zu realisieren sind.

Ausführungsbeispiele der Erfindung werden nachfolgend anhand der beigefügten Zeichnung näher erläutert. Darin zeigt:
- Fig. 1: eine perspektivische schematische Darstellung eines Motors mit einem Motor-Gehäusekörper als erste Ausführungsform für ein in MIM-Technik gefertigtes Bauelement zur Umhüllung eines unter Druck stehenden Fluids mit einem in einen Wandbereich des Gehäusekörpers integrierten Drucksensor und einem Deckel in Form eines Zylinderkopfes als zweite Ausführungsform für ein solches Bauelement mit mehreren in einen Wandbereich des Deckels integrierten Drucksensoren;

- Fig. 2: eine Schnittansicht durch ein Rohrteilstück als dritte Ausführungsform für ein in MIM-Technik hergestelltes Bauelement mit integriertem Drucksensor;
- Fig. 3: eine perspektivische Schnittansicht eines bei den zuvor genannten Ausführungsformen von Bauelementen in das Bauelement integrierten ersten Verformungskörpers (z.B. Druckmesszelle) des Drucksensors mit Anschlusseinrichtungen;
- Fig. 4: eine perspektivische Gesamtansicht des bauelement-integrierten Verformkörpers (z.B. Druckmesszelle) mit Anschlusseinrichtungen von Fig. 2; und
- Fig. 5: eine perspektivische Schnittansicht eines bei einer weiteren Ausführungsform eines Bauelement in einen Wandbereich desselben integrierten zweiten Verformkörpers (z. B. Druckmesszelle).

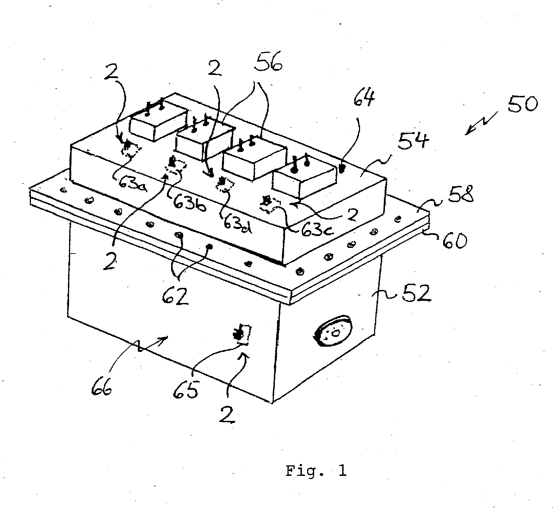

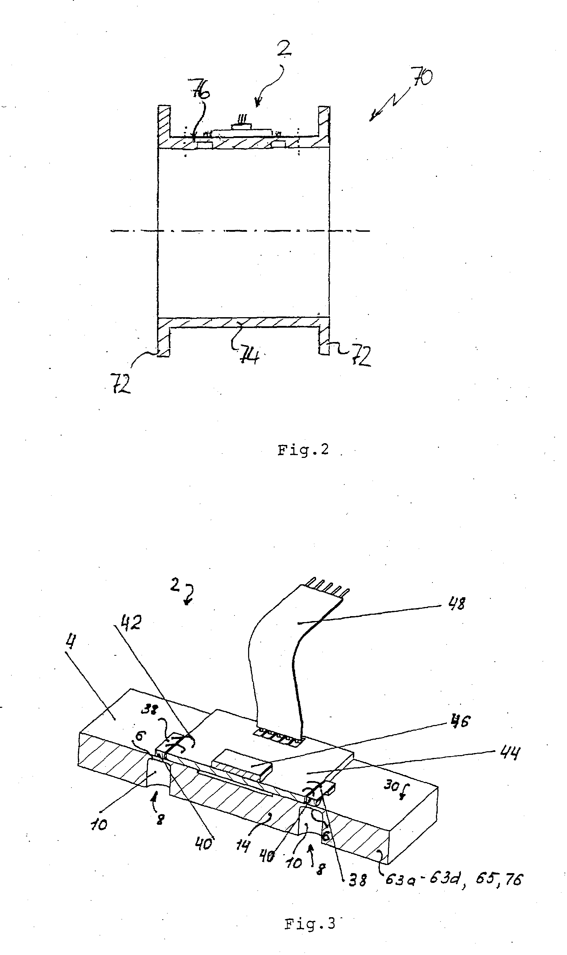

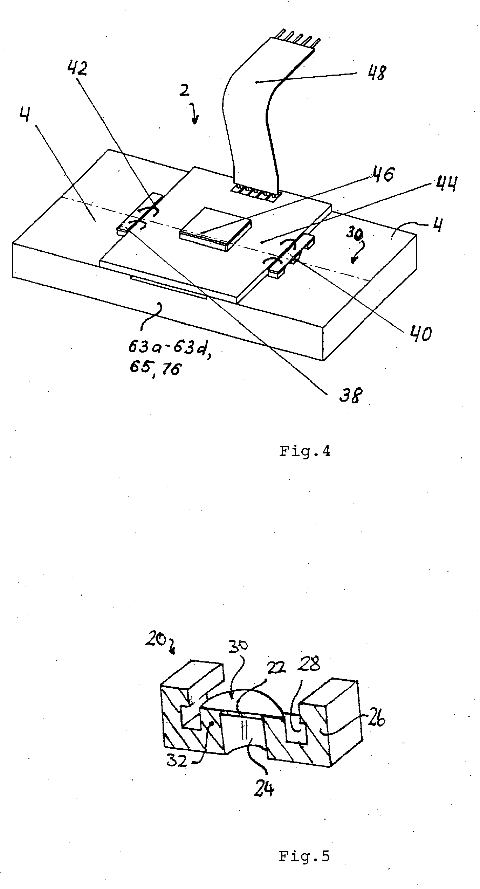

In den Fig. 1 und 2 sind verschiedene Bauelemente 52, 54, 70 mit darin integrierten Drucksensoren 2 dargestellt, und in den Fig. 3 und 4 ist eine erste Ausführungsform des insgesamt mit 2 bezeichneten Bauelement-integrierten Drucksensors gemäß einer ersten Ausführungsform dargestellt. Fig. 4 zeigt dabei eine Gesamtansicht des integrierten Drucksensors 2 und Fig. 3 einen Längsschnitt durch den Drucksensor 2 entlang der strichpunktierten Linie von Fig. 4.

Fig. 1 zeigt einen Motor 50 mit einem Motor-Gehäusekörper 52 und einem Deckel 54 hierfür, beispielsweise ausgebildet als Kurbelgehäuse (52) bzw. Zylinderkopf (54) eines Hubkolbenmotors (50). Der Gehäusekörper 52 und der Deckel 54 sind zur Erfüllung der üblichen Funktionen entsprechend profiliert ausgebildet und auch recht kompliziert gestaltet, was in der schematischen Darstellung durch Erhebungen 56 am Deckel 54 angedeutet ist. Der Deckel 54 schließt den Gehäusekörper 54 druckdicht ab. Im Inneren sind verschiedene unter Druck stehende Fluide wie Motoröl und Verbrennungsgase eingeschlossen. Der Deckel 54 und der Gehäusekörper 52 sind an integral damit ausgebildeten Flanschen 58, 60 miteinander druckdicht mittels geeigneter Befestiger 62 verbunden. Der Deckel 54 und der Gehäusekörper 52 sind somit allgemein gesehen Bauelemente zum Bilden einer Umhüllung (hier der Motor 50; es könnte auch eine andere Maschine oder ein anderes Behältnis sein) zum Aufnehmen von unter Druck stehendem Fluid. Um den Druck des jeweiligen Fluid messen zu können, sind in dem Ausführungsbeispiel mehrere Wandbereiche 63a, 63b, 63c, 63d der Oberseite 64 des Deckels 54 sowie ein Wandbereich 65 einer Seitenwand 66 des Gehäusekörpers 52 als integrierte Verformungskörper von integrierten Drucksensoren 2 ausgebildet. Die entsprechend den Verformungskörper bildenden Wandbereiche sind durch punktierte Linien angedeutet, tatsächlich findet sich hier kein Übergang, sondern diese Wandbereiche fügen sich naht- und übergangslos in den Rest der umgebenden Wandungen 64, 66 ein.

In Fig. 2 ist ein einstückiges Rohrteilstück 70 einer Druckleitung für unter Druck stehendes Fluid als weiteres Beispiel für ein Bauelement zum Bilden einer ein unter Druck stehendes Fluid leitenden Umhüllung dargestellt. Das Rohrteilstück 70 hat an seinen beiden Enden jeweils einen Flansch 72 zur Befestigung an den anschließenden Leitungselementen (nicht dargestellt).Dazwischen befindet sich ein hier kreiszylindrischer Rohrmantel 74. Ein Wandbereich 76 des Rohrmantels 74 ist als einstückig integrierter Verformungskörper des integrierten Drucksensors 2 ausgebildet. Dieser Wandbereich 76 ist in Fig. 2 durch strichpunktierte Grenzlinien angedeutet; auch hier gibt es wie bei dem Beispiel von Fig. 1 aber einen nahtlosen Übergang zu dem Rest des Rohrmantels 74.

In den Fig. 3 bis 4 ist beispielhaft dargestellt, wie die in den Fig. 1 und zwei durch strichpunktierte Grenzlinien angedeuteten, einen Verformungskörper bildenden Wandbereiche 63a-63d, 65, 76 genauer ausgebildet sein können.

Der integrierte Drucksensor 2 hat hier als Verformkörper eine Drucksensorkapsel 4, die jeweils durch die Wandbereiche 63a-63d, 65, 76 gebildet ist. Die Drucksensorkapsel 4 ist zur gleichzeitigen Messung von mehreren Drücken in dem einstückigen Bauelement 52, 54, 70 ausgebildet. Hierzu weist die Drucksensorkapsel 4 mehrere, nämlich hier zwei, Membrane 6 auf. Die beiden Membrane 6 sind einstückig und ohne Fugestellen mit der Drucksensorkapsel 4 ausgebildet. Dabei begrenzen die Membrane 6 an einer Seite jeweils eine als Sacköffnung 8 ausgebildete und durch einen Wandungsbereich 14 ringsum umgebene Druckmesskammer 10.

Die Drucksensorkapsel 4 ist insgesamt in Form der integrierten Wandbereichen 63a-63d, 65, 74 ausgebildet. Zur Herstellung des gesamten Bauelements 52, 54, 70 mit dem jeweils integrierten Wandbereich 63a-63d, 65, 76 wird ein MIM-Verfahren eingesetzt. Das MIM-Verfahren wird so durchgeführt, dass die das jeweilige Bauelement 52, 54, 70 aus ausscheidungshärtendem, rostfreiem Stahl der Klasse 17-4 PH mit folgender nomineller Zusammensetzung (in Prozente) gebildet ist:

| | |
|---|---|
| Cr | 16.2 |
| Ni | 4.5 |
| Cu | 3.6 |
| Nb + Ta | 0.20 |
| Si | 0.5 maximal |
| Mn | 0.5 maximal |
| C | 0.03 maximal |
| Fe | Rest |

Das Material hat zum Beispiel je nach Metallnachbearbeitung (Sintern/Ausscheidungshärten) die in Tabelle 1 wiedergegebenen typischen Eigenschaften.

**Tabelle 1**

| Typische Eigenschaften | gesintert | ausscheidungsgehärtet | |
|---|---|---|---|
| | | H-900 | H-1000 |
| Dichte (g/cm³) | 7.65 | | |
| Härte, R^{c} | 25 | 38 | 33 |
| Elastizitätsmodul (10⁵ Mpa) | 1.93 | | |
| Bruchdehnung (%) | -6 | 7.5 | 8 |
| Zugfestigkeit (MPa, N/mm²) | 970 | 1170 | 1030 |
| Streckgrenze (MPa, N/mm²) | 890 | 1100 | 980 |
| Oberflächengüte, Rauheit | Rₐ 3.2 | | |

Beim MIM-Verfahren wird in der an sich bekannten Weise vorgegangen, dass aus Kunststoff und sehr feinem Metallpulvern, welches Metallpulver die obigen Eigenschaften liefert, ein spritzfähiges Ausgangsmaterial hergestellt wird. Dieses Ausgangsmaterial hat einen Metallpulvergehalt von über 90 Gewichts-Prozent. Dieses Material wird mit einer konventionellen Plastikspritzgießmaschine wie Kunststoff zu einem der späteren Form der Bauelements 52, 54, 70 mit entsprechend größeren Abmaßen entsprechenden grünen Formteil verarbeitet. Danach wird der Kunststoffanteil aus dem Formteil herausgelöst, ohne dass das Formteil selbst seine Form verliert. Danach erfolgt eine Sinterung des Formteiles, wobei die metallischen Eigenschaften erhalten werden. Dabei schrumpft das Teil auf sein Endmaß mit entsprechend hoher Dichte. Eventuell erfolgt noch eine Ausscheidungshärtung.

Es gibt verschiedene Anbieter, die das Durchführen eines solches MIM-Verfahrens nach entsprechenden Vorgaben anbieten, beispielsweise die Schweizer Firma Parmaco Metal Injection Moulding AG in CH-8376 Fischingen.

Das mit der Drucksensorkapsel 4 integral versehene fertige Bauelement 52, 54, 70 sollte zur Anwendbarkeit des MIM-Verfahrens bestimmte Abmessungen bzw. ein bestimmtes Design haben. So sollte die Membran 6 jeweils nicht dünner als 0.3 mm ausgebildet sein. Die Toleranzen beim Sinterprozess sind 22 % größer als beim Spritzen und 18 % kleiner als beim Sintern. Es wird z. B. eine N6-Oberfläche vorgesehen. Die Partikelgröße des Metallpulvers beträgt z. B. ca. 15 µm. Feinere Metallpulver sind möglich, z. B. bis ca. 5 µm.

Mit diesem Verfahren können sehr leicht kundenspezifische Bauelemente 52, 54 70 mit integriertem Verformungskörper gefertigt werden.

Die Fig. 3 zeigt dabei einen Schnitt durch die in die Wand des jeweiligen Bauelements 52, 54, 70 integrierten Drucksensorkapsel 4 mit mehreren Membranen 6. Als weiteres Beispiel ist in Fig. 5 eine Druckkapsel 20 für ein weiteres Ausführungsbeispiel eines in ein (nicht näher dargestelltes) Bauelement integrierten Drucksensors gezeigt. Der durch die Druckkapsel 20 gebildete Verformungskörper liegt in Form einer im MIM-Verfahren hergestellten Hutmembran mit einem integrierten Membran 22 und einer durch einen Wandbereich 32 zylinderförmig begrenzten Druckmesskammer 24 vor. Es ist beispielhaft dargestellt, dass die Druckkapsel 20 insgesamt nicht rotationssymmetrisch ist und komplizierte Befestigungsabschnitte 26 mit Hinterschneidungen 28 aufweist.

Das Endmaterial ist Stahl 17/4 ph (ferritisch, aufgrund des Herstellungsprozesses C-frei), der von den Eigenschaften ähnlich zu 1.4548 ist.

Das (grüne) Formteil wird um 23.3 % größer als die fertige Druckkapsel 20 bzw. Drucksensorkapsel 4 hergestellt.

Bei der Herstellung wird derart vorgegangen, dass die Spritzdüse von der Oberseite 30 aus zentrisch an den später die Membrane 6, 22 bildenden Membranbereichen angesetzt wird. Hierdurch ergibt sich eine gute Homogenität im Bereich der kreisringförmigen Membrane 6, 22. Die Druckmesskammern 10, 24 werden durch auswechselbare Einsätze in der jeweiligen Form gebildet. Hierzu können für verschiedene Druckbereich verschiedene Einsätze eingesetzt werden. Ausgestoßen wird dann von der konkaven Seite aus.

Die Membrane 6, 22 werden zunächst dicker hergestellt und anschließend durch Nachbearbeitung abgetragen. Beispielsweise werden die Membrane 6, 22 um einige Hundertstel Millimeter abgeschliffen. Dadurch kann man sich Kontrollen ersparen.

Einfache Bauelemente kann man mit einer einzigen Form und einem einzelnen Formteil herstellen. Werden die Bauelemente komplizierter, kann man mehrere grüne Formteile herstellen und anschließend zusammensintern.

Bei der in den Fig. 3 und 4 gezeigten Ausführungsform mit den mehreren Membranen 6 wir pro Membran wenigstens eine Einspritzdüse verwendet, die zentrisch zu der jeweiligen Membran angesetzt wird. Alternativ kann jeder Membranbereich, der später eine Membran 6 bildet, einzeln gespritzt werden und dann auf einem verbleibenden Wandbereich bei 1.200°C aufgesintert werden.

Wie Fig. 5 zeigt, können nicht rotationssymmetrische Befestigungselemente, hier die Befestigungsabschnitte 26, am Membranrand mit dem hier dargestellten Verfahren sehr einfach realisiert werden.

In den Fig. 3 und 4 ist an der Drucksensorkapsel noch an jeder Membran 6 ein Kraftaufnehmer 38, z. B. in Form eines Biegebalkens 40 aufgebracht. Alternativ könnten an den Stellen maximaler Dehnung und Stauchung geeignete Dehnmessstreifen (DMS) (nicht dargestellt) formschlüssig aufgebracht werden. Bezugszeichen 42 bezeichnet die Bond-Verdrahtung. Weiter ist auf einer Leiterplatte 44 ein ASIC-Chip 46 aufgebracht, der zur elektronischen Verstärkung, Kalbration und Kompensation dient. Damit können präzise Druck- oder Spannungsmessungen erhalten werden. Ein elektrischer Ausgang 48 auf der Leiterplatte 44 ermöglicht den Signalabgriff von außen.

Damit ist insgesamt ein Bauelement mit integriertem Drucksensor 2 in einfacher Weise ganz nach Kundenwünschen herstellbar.

Entsprechende Bauteile (DMS, 38, 40, 42, 44, 46 und/oder 48) können selbstverständlich auch an der Druckkapsel 20 gemäß Fig. 5 zum Komplettieren eines entsprechenden Drucksensors vorhanden sein.

### BEZUGSZEICHENLISTE

- 2: Drucksensor
- 4: Drucksensorkapsel (Druckmesszelle)
- 6: Membran
- 8: Sacköffnung
- 10: Druckmesskammer
- 14: Wandungsbereich
- 20: Druckkapsel (Druckmesszelle)
- 22: Membran
- 24: Druckmesskammer
- 26: Befestigungsabschnitt
- 28: Hinterschneidung
- 30: Oberseite
- 32: Wandungsbereich
- 38: Kraftaufnehmer
- 40: Biegebalken
- 42: Bond-Verdrahtung
- 44: Leiterplatte
- 46: ASIC-Chip
- 48: elektrischer Ausgang
- 50: Motor
- 52: Gehäusekörper (Bauelement)
- 54: Deckel (Bauelement)
- 56: Erhebungen
- 58: Flansch am Deckel
- 60: Flansch am Gehäusekörper
- 62: Befestiger, zum Beispiel Zylinderkopfschrauben
- 63a-63d: als Verformungskörper ausgebildete Wandbereiche an dem Deckel
- 64: Oberseite des Deckels
- 65: als Verformungskörper ausgebildeter Wandbereich des Gehäusekörpers
- 66: Seitenwand des Gehäusekörpers
- 70: Rohrteilstück (Bauelement)
- 72: Flansch
- 74: Rohrmantel
- 76: als Verformungskörper ausgebildeter Wandbereich des Rohrmantels

## Patentansprüche

**1.** Profiliertes einteiliges Bauelement (52, 54, 70) aus Metall zum Bilden einer ein unter Druck stehendes Fluid aufnehmenden oder leitenden Umhüllung, wobei die Profilierung (56, 58, 60; 72) durch Herstellung des Bauelements in MIM-Technik mittels eines Spritzgusspulvers eingebracht ist, wobei wenigstens ein Wandbereich (63a-63d; 65, 76) des Bauelements einen einstückig in das Bauelement integrierten Verformungskörper (4, 63a-63d; 65, 76, 20, 6, 22) eines Drucksensors (2) bildet, welcher Verformungskörper (4, 63a-63d; 65, 76; 20; 6, 22) durch das unter Druck stehende Fluid verformbar ist, um so den Druck des Fluids mittels des Drucksensors (2) zu messen.

**2.** Baulement nach Anspruch 1,
**dadurch gekennzeichnet;**
**dass** der den Verformkörper bildende Wandbereich (63a-63d; 65, 76) eine durch gezielte Ausdünnung gebildete Membran (6) aufweist.

**3.** Bauelement nach einem der voranstehenden Ansprüche,
**dadurch gekennzeichnet,**
**dass** der den Verformkörper bildende Wandbereich (63a-63d; 65, 76) mehrere durch gezielte Ausdünnung integrierte Membrane (6) aufweist.

**4.** Bauelement nach einem der voranstehenden Ansprüche,
**dadurch gekennzeichnet,**
**dass** an Stellen maximaler Dehnung oder Stauchung, insbesondere an einem oder mehreren Membranbereichen (6; 22), des Verformungskörpers (63a-63d; 65, 76; 4; 20) Kraftaufnehmer (38), insbesondere in Form von Dehnmesstreifen und/oder Biegebalken (40) aufgebracht sind.

**5.** Bauelement nach einem der voranstehenden Ansprüche,
**dadurch gekennzeichnet,**
**dass** es ein Gehäusekörper (52) oder ein Deckel (54) eines das unter Druck stehende Fluid druckdicht aufnehmenden Gehäuses ist.

**6.** Bauelement nach einem der Ansprüche 1 bis 4,
**dadurch gekennzeichnet,**
**dass** es ein Rohrteilstück (70) einer Fluidleitung ist.

**7.** Bauelement nach einem der voranstehenden Ansprüche,
**dadurch gekennzeichnet,**
**dass** es aus rostfreien Federstahl der Klasse 17-4 PH gebildet ist.

**8.** Bauelement nach einem der voranstehenden Ansprüche,
**dadurch gekennzeichnet,**
**dass** an dem den Verformkörper bildenden Wandbereich (63a-63d; 65, 76) des Bauelements (52, 54, 70) sowohl wenigstens ein eine Membran (6, 22) bildender Membranbereich als auch ein die Membran (6, 22) stützender umlaufender Wandungsbereich (14, 32) einer Druckmesszelle (4, 20) einstückig und somit ohne Fügestellen, Nahtbereichen. Schweiß- oder Lötstellen ausgebildet sind.

**9.** Verfahren zum Versehen einer ein unter Druck stehendes Fluid aufnehmenden Umhüllung mit einem Drucksensor (2) zum Messen des Drucks,
**dadurch gekennzeichnet,**
**dass** wenigstens ein ein Teilstück der Umhüllung bildendes Bauelement (52, 54, 70) in einem MIM-Verfahren derart hergestellt wird, dass ein einstückiger Wandbereich (63a-63d; 65, 76) des Bauelements als durch den Druck des Fluids verformbarer Verformungskörper (4, 20; 6, 22) eines Drucksensors (2) ausgebildet wird.

**10.** Verfahren nach Anspruch 9, wobei zum Herstellen des einstückig mit dem Verformungskörper (4, 63a-63d; 65, 76; 20; 6, 22) des Drucksensors (2) versehenen Bauelements (52, 54, 70) folgende Reihenfolge von Schritten durchgeführt wird:
a) Mischen eines spritzfähigen Ausgangsmaterials aus Metallpulver und Binder;
b) Spritzgießen des Ausgangsmaterials zu einem die Form des Bauelements mit dem den Verformungskörper (4; 20) bildenden Wandbereich (63a-63d; 65, 76) einschließlich eines Membranbereiches (6, 22) vorgebenden grünen Formteiles,
c) Herauslösen des Binderanteiles aus dem grünen Formteil
d) Sintern des Formteils.

**12.** Verfahren nach Anspruch 10, **gekennzeichnet durch** den nach dem Schritt d) erfolgenden Schritt:
e) Nachbearbeiten wenigstens einer Oberfläche des Membranbereiches (6, 22) **durch** Materialabtrag.

**13.** Verfahren nach Anspruch 12,
**dadurch gekennzeichnet,**
**dass** in Schritt e) der Materialabtrag durch Abschleifen, insbesondere um einige hunderstel Millimeter, erfolgt.

**14.** Verfahren nach einem der voranstehenden Ansprüche,
**dadurch gekennzeichnet,**
**dass** als Metallpulver ein Stahlpulver zum Herstellen eines ferritischen, rostfreien Stahles verwendet wird.

**15.** Verfahren nach einem der voranstehenden Ansprüche,
**dadurch gekennzeichnet,**
**dass** ein Metallpulver mit einer Partikelgröße von weniger als ca. 20µm, insbesondere von ca. 5µm bis ca.15µm, verwendet wird.

**16.** Verfahren nach einem der voranstehenden Ansprüche,
**dadurch gekennzeichnet,**
**dass** zum Herstellen eines Formteiles mit einem in Draufsicht etwa kreisförmig berandeten Membranbereich eine Spritzgussdüse etwa zentral am herzustellenden Membranbereich (6, 22) angesetzt wird.

**17.** Verfahren nach einem der voranstehenden Ansprüche,
**dadurch gekennzeichnet,**
**dass** zum Herstellen eines Formteiles mit mehreren Membranbereichen pro Membranbereich eine Spritzgussdüse verwendet wird.

**18.** Verfahren nach einem der voranstehenden Ansprüche,
**dadurch gekennzeichnet,**
**dass** zum Herstellen eines Bauelements mit mehreren Membranbereichen (6) zunächst mehrere Formteile im Metall-Spritzgussverfahren hergestellt werden und dann zu dem einzelnen Bauelement zusammengesintert werden.
